Europäisches Patentamt

European Patent Office

Office européen des brevets

(11) Veröffentlichungsnummer: **0 490 227 A2**

## (12) EUROPÄISCHE PATENTANMELDUNG

(21) Anmeldenummer: **91120733.0**

(22) Anmeldetag: **03.12.91**

(51) Int. Cl.⁵: **G11B 11/10**

(30) Priorität: **14.12.90 DE 4039919**

(43) Veröffentlichungstag der Anmeldung:
**17.06.92 Patentblatt 92/25**

(84) Benannte Vertragsstaaten:
**DE FR GB IT NL**

(71) Anmelder: **BASF Aktiengesellschaft**
**Carl-Bosch-Strasse 38**
**W-6700 Ludwigshafen(DE)**

(72) Erfinder: **Harth, Klaus, Dr.**
**Starenweg 6**
**W-6719 Altleiningen(DE)**
Erfinder: **Hibst, Hartmut, Dr.**
**Branichstrasse 23**
**W-6905 Schriesheim(DE)**

(54) **Magnetooptische Datenplatte mit korrosionsstabiler magnetooptischer Doppelschicht.**

㉟ Die Erfindung betrifft eine magnetooptische Datenplatte mit mindestens einem optisch transparenten dimensionsstabilen Substrat und mindestens einem Doppelschichtsystem aus zwei austauschgekoppelten magnetischen Schichten, die aus Legierungen von Seltenen Erden mit Übergangsmetallen bestehen und eine vertikale magnetische Anisotropie aufweisen, wobei die dem Lesekopf zugewandte erste magnetische Schicht eine Zusammensetzung entsprechend Formel I

$$RE_xTM_{100-x-a-b}A_aB_b \qquad I,$$

hat und die zweite magnetische Schicht, die auf der dem Lesekopf abgewandten Seite der ersten magnetischen Schicht angeordnet ist, eine Zusammensetzung entsprechend Formel II hat

$$RE_uTM_{100-u-c}C_c \qquad II,$$

wobei

RE mindestens ein Element aus der Reihe Gd, Tb, Dy, Ho,

TM mindestens ein Element aus der Reihe Fe, Co,

A mindestens ein Element aus der Reihe La, Ce, Pr, Nd, Sm, Eu oder stabile Isotope von U,

B und C unabhängig voneinander mindestens ein Element aus der Reihe Cr, Nb, Ta, Al, Si, Ni, Mo,

bedeutet und

$5 \leq x \leq 30$,
$0{,}5 \leq a \leq 20$,
$0 \leq b \leq 25$,
$15 \leq u \leq 30$,
$0{,}5 \leq c \leq 25$

gilt.

Die Erfindung betrifft eine magnetooptische Datenplatte mit mindestens einem optisch transparenten dimensionsstabilen Substrat und mindestens einem Doppelschichtsystem aus zwei austauschgekoppelten magnetischen Schichten, die aus Legierungen von Seltenen Erden mit Übergangsmetallen bestehen und eine vertikale magnetische Anisotropie aufweisen.

Bekannte magnetooptische Aufzeichnungsschichten für das Aufzeichnen und Lesen von Informationen sind beispielsweise einkristalline Granatschichten (z.B. Yttrium-Eisen-Granat), polykristalline Schichten aus MnBi oder amorphe Schichten aus Legierungen von Lanthaniden (RE) und Übergangsmetallen (TM), im folgenden mit (RE-TM) abgekürzt.

Neuerdings werden die amorphen (RE-TM)-Schichten bevorzugt, da diese Aufzeichnungsschichten großflächig durch Kathodenzerstäubungsmethoden oder durch Aufdampfmethoden hergestellt werden können, und die aufgezeichneten Signale mit einem geringen Rauschen ausgelesen werden können. Viele amorphe (RE-TM)-Legierungen, wie zum Beispiel Tb-Fe, Tb-Fe-Co, Gd-Tb-Fe-Co, Dy-Fe-Co, Nd-Tb-Fe-Co oder Nd-Dy-Fe-Co, besitzen zusätzlich den Vorteil, daß die ferrimagnetische Kopplung der RE- und TM-Atome eine hohe Koerzitivfeldstärke in einer Richtung senkrecht zur Schichtebene ergibt.

Diese bekannten magnetooptischen Datenplatten dienen dem Aufzeichnen oder Schreiben von Daten mit Hilfe von Laserstrahlen (beispielsweise impulsmoduliert), welche auf die magnetooptischen Aufzeichnungsschichten fokussiert sind und senkrecht auf diese auftreffen.

Beim Aufzeichnen oder Schreiben von Daten wird an die magnetooptischen Datenplatten ein externes magnetisches Hilfsfeld angelegt, dessen Feldlinien senkrecht zur Oberfläche der magnetooptischen Aufzeichnungsschichten ausgerichtet sind. Die Richtung des externen Magnetfeldes ist der Magnetisierungsrichtung der magnetooptischen Aufzeichnungsschicht entgegengerichtet. Zusätzlich können die magnetooptischen Aufzeichnungsschichten ein entsprechend ausgerichtetes schichtimmanentes (intrinsisches) Magnetfeld aufweisen. Bei einem bekannten alternativen Schreibverfahren wird das äußere Magnetfeld zeitlich moduliert, während der Laserstrahl kontinuierlich das Medium bestrahlt.

Die aus amorphen ferrimagnetischen (RE-TM)-Legierungen bestehenden, senkrecht zu ihrer Oberfläche magnetisierten, gegebenenfalls mehrschichtigen magnetooptischen Aufzeichnungsschichten werden beim Einschreiben der Daten durch den Schreiblaserstrahl im Bereich der Auftreffstelle erwärmt. Durch die Erwärmung nimmt die Koerzitivfeldstärke $H_c$ der Legierungen ab. Unterschreitet die Koerzitivfeldstärke $H_c$ bei einer von der jeweils verwendeten Legierung abhängigen kritischen Temperatur die Summe der Feldstärken des anliegenden (externen) magnetischen Hilfsfeldes und des intrinsischen Feldes, entsteht in der Auftreffstelle ein Bereich, welcher eine der ursprünglichen Richtung entgegengesetzte Magnetisierungsrichtung aufweist. Ein solcher Bereich wird auch als magnetische Domäne bezeichnet.

Bekanntermaßen wird beim Schreiben der Daten der Schreiblaserstrahl in relativer Bewegung über die Oberfläche der magnetooptischen Datenplatten bzw. deren magnetooptische Aufzeichnungsschicht hinweggeführt. Im allgemeinen wird hierbei der Laserstrahl von einer verschiebbaren optischen Vorrichtung auf die Aufzeichnungsschicht fokussiert und die betreffende magnetooptische Datenplatte mit konstanter Winkelgeschwindigkeit ("constant angular velocity", CAV) gedreht.

Bekanntermaßen können die in die magnetooptischen Datenplatten eingeschriebenen Daten durch gezieltes lokales Erhitzen ihrer magnetooptischen Aufzeichnungsschicht z.B. mittels eines unmodulierten kontinuierlichen Laserstrahls bei gleichzeitiger Einwirkung eines externen oder eines intrinsischen magnetischen Feldes, dessen Feldlinien senkrecht zur Oberfläche der Aufzeichnungsschicht ausgerichtet sind, bei Bedarf gelöscht werden, wonach man neue Daten einschreiben kann. D.h., der Schreibvorgang ist reversibel.

Für das Lesen der Daten verwendet man üblicherweise das linear polarisierte Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht selbst oder von einer hinter ihr angeordneten Reflexionsschicht reflektiert, wobei es zu einer Wechselwirkung zwischen den magnetischen Momenten in der Aufzeichnungsschicht und dem elektromagnetischen Feld des Laserlichts kommt. Durch diese Wechselwirkung wird die Ebene der Polarisation des reflektierten Laserlichts gegenüber der ursprünglichen Ebene um einen kleinen Winkel gedreht. Geschieht diese Drehung der Ebene der Polarisation bei der Reflexion des Lichts an der Aufzeichnungsschicht selbst, bezeichnet man dies als Kerr-Effekt und den Drehwinkel demnach als Kerr-Drehwinkel; wird dagegen die Ebene beim zwei- oder mehrmaligen Durchgang des Lichts durch die Aufzeichnungsschicht gedreht, spricht man vom Faraday-Effekt und vom Faraday-Drehwinkel. Die Richtung der Drehung der Polarisationsebene hängt ab von der Magnetisierungsrichtung an der betreffenden Stelle der Speicherschicht. Diese Drehung der Ebene der Polarisation des von der magnetooptischen Datenplatte reflektierten Laserlichts kann mit Hilfe geeigneter optischer und elektronischer Geräte gemessen und in Signale umgewandelt werden, wie beispielsweise in US-A 4 466 035 beschrieben. Das magnetooptische Auslesesignal ist proportional zum Produkt aus Kerr-Drehwinkel und Reflexionsvermögen des magnetooptischen Schichtsystems. Erhöhte Kerr-Drehwinkel bewirken demnach ein erhöhtes Auslesesignal und einen entsprechend verbesserten Signal/Rausch-Abstand.

Für die derzeit verwendeten Laserwellenlängen (780 nm bis 830 nm) liegt der Kerr-Drehwinkel der erwähnten (RE-TM)-Legierungen in der Regel im Bereich von 0,2 bis 0,3⁰. Der Kerr-Drehwinkel von Legierungen auf der Basis der schweren RE-Elemente Gd, Tb und Dy nimmt in der Regel mit abnehmender Wellenlänge ab. Da für zukünftige magnetooptische Datenplatten der Einsatz kurzwelligerer Laser erwartet wird, besitzen die erwähnten (RE-TM)-Legierungen den Nachteil eines reduzierten magnetooptischen Auslesesignals.

Wie in besagter US-A 4 466 035 beschrieben, kann der Kerr-Drehwinkel durch die Verwendung geeigneter dielektrischer Schichten auf der Vor- und Rückseite der magnetooptischen Aufzeichnungsschicht sowie durch die Verwendung eines metallischen Reflektors auf der Rückseite der magnetooptischen Aufzeichnungsschicht gesteigert werden. Bei einer Erhöhung des Kerr-Drehwinkels mit Hilfe dielektrischer Schichten muß in der Regel eine Abnahme des Reflexionsvermögens in Kauf genommen werden. Da zum Betreiben eines magnetooptischen Speichermediums in einem Laufwerk nach dem Stand der Technik ein Mindestreflexionsvermögen erforderlich ist, sind der Steigerung des magnetooptischen Auslesesignals auf die beschriebene Art und Weise Grenzen gesetzt. Insbesondere kann die erwähnte nachteilige Reduktion des Kerr-Drehwinkels mit abnehmender Wellenlänge des aufzeichnenden Lasers durch die optische Abstimmung mit dielektrischen Schichten nicht vermieden werden.

In alternativer Weise kann der Kerr-Drehwinkel einer amorphen (RE-TM)-Schicht durch Zulegieren von weiteren Elementen gesteigert werden. Es ist bekannt, daß die leichten RE-Elemente, insbesondere Pr, Nd und Sm eine Erhöhung des Kerr-Drehwinkels in einer amorphen (RE-TM)-Legierung bewirken (vgl. Journal of Magnetics & Magnetic Materials 54 - 57 (1986) 1365 und IEEE Transactions on Magnetics MAG 21 (1985) 1601). Der Vorteil des erhöhten Kerr-Drehwinkels konnte jedoch bisher nicht genutzt werden, da durch das Zulegieren des leichten RE-Elements die Koerzitivfeldstärke in Richtung senkrecht zur (RE-TM)-Schicht stark herabgesetzt wurde (vgl. Journal of Applied Physics Vol. 61 (1987) 3349 und Japanese Journal of Applied Physics Vol. 26 (1987) 19). Da bei einer starken Reduktion der Koerzitivfeldstärke die Datenstabilität nicht gewährleistet ist, mußte die Konzentration des leichten RE-Elementes in den bekannten magnetooptischen Aufzeichnungsschichten klein gehalten werden.

Ein weiterer großer Nachteil der erwähnten (RE-TM)-Legierungen ist ihre mangelnde Korrosionsbeständigkeit. Bei direktem Kontakt der Schichten mit Luft oder Wasserdampf erfolgt eine fortschreitende großflächige Oxidation der magnetooptischen Schicht, die zunächst eine Reduktion des Kerr-Drehwinkels und der Reflektivität und damit eine Abnahme des Signal/Rausch-Verhältnisses bewirkt und schließlich zu vollständig oxidierten, magnetooptisch unbrauchbaren Schichten führt.

Eine Möglichkeit der Verbesserung der Korrosionsbeständigkeit von magnetooptischen Datenplatten auf der Basis von (RE-TM)-Legierungen ist das Aufbringen einer transparenten vorder- und rückseitigen Schutzschicht zur Vermeidung des direkten Luft-Kontaktes der Aufzeichnungsschicht und zur Unterbindung des Eindiffundierens von Sauerstoff- oder Wassermolekülen. Dies ist nur möglich durch sehr dichte, riß- und porenfreie Schichten, zum Beispiel aus $Si_3N_4$ oder AlN. Durch die zusätzliche Deposition der transparenten Schutzschichten vor und nach dem Aufbringen der Aufzeichnungsschicht wird jedoch der Produktionsprozeß einer magnetooptischen Datenplatte deutlich verlängert und verteuert. Außerdem können Defekte in der Schutzschicht, wie zum Beispiel Pinholes oder Risse, zur Korrosion der tieferliegenden magnetooptischen Aufzeichnungsschicht führen. Eine aufwendige Qualitätskontrolle der deponierten Schutzschichten ist daher notwendig, um ihre Schutzwirkung sicherzustellen.

Aufgrund der hohen Oxidationsempfindlichkeit von (RE-TM)-Legierungen kann es auch in der Beschichtungskammer zu Reaktionen der (RE-TM)-Legierung mit den Reaktivgasen im Restgas kommen. Insbesondere während des Zeitraums, der nach dem Aufbringen einer (RE-TM)-haltigen Schicht und vor dem Aufbringen der nachfolgenden Schicht vergeht (z.B. durch den Wechsel des Sputtertargets oder den Transport der beschichteten Platte), kann sich durch Reaktion mit den $O_2$- bzw. $H_2O$-Molekülen des Restgases eine oberflächliche Oxidschicht bilden.

In den weiter unten beschriebenen bekannten austauschgekoppelten Doppelschichtsystemen erfolgt eine Schwächung der Austauschwechselwirkung bei Raumtemperatur zwischen Lese- und Speicherschicht durch nichtmagnetische Zwischenschichten, welche sich nach der Herstellung der ersten magnetischen Schicht und vor dem Aufbringen der zweiten magnetischen Schicht durch eine Reaktion der (RE-TM)-Legierung mit Reaktivgasen des Restgases der Beschichtungsanlage bilden. Diese Austauschwechselwirkung wird bereits durch Monolagen einer nicht magnetischen Zwischenschicht, zum Beispiel eines Metalloxids, entscheidend reduziert. Die oberflächliche Oxidschicht kann zwar durch Ätzprozesse, wie z.B. einen Plasmaätzprozeß in Ar-Atmosphäre, weitgehend entfernt werden, der Produktionsprozeß der magnetooptischen Datenplatte wird hierdurch jedoch verlängert und verteuert.

Eine Methode zur Verbesserung des Korrosionsverhaltens von amorphen (RE-TM)-Legierungen bietet das Zulegieren von sogenannten Korrosionsinhibitoren, d.h. Elementen, die zu einer zeitlichen Verzögerung der Korrosion der Aufzeichnungsschicht führen. Es ist eine Reihe von (RE-TM)-Legierungen mit homogen zulegierten Korrosionsinhibitoren bekannt.

Beispielsweise beschreibt EP-A 229 292 einen magnetooptischen Aufzeichnungsträger, der aus einer (RE-TM)-Legierung mit einem zusätzlichen Element, wie zum Beispiel Ti, Cr, Al, Pt, Zr, V, Ta, Mo, W, Cu, Ru, Rh, Pd, Nb, Ir oder Hf besteht. Die Zugabe der besagten Elemente verzögert die Abnahme der Koerzitivfeldstärke sowie des Kerr-Drehwinkels bei Lagerung der magnetooptischen Schicht in direktem Kontakt mit feuchter Luft.

US-A 4 693 943 beschreibt einen magnetooptischen Aufzeichnungsträger mit einer amorphen (RE-TM)-Legierung der Komposition $[(GdTb)_{1-y}(FeCo)_y]_{1-p}Cr_p$, wobei $0,5 \leq y \leq 0,9$ und $0,001 \leq p \leq 0,3$ ist. Die Zugabe von Cr verbessert dabei deutlich die Korrosionsstabilität des magnetooptischen Aufzeichnungsträgers. Es wurde gefunden, daß die Korrosionsstabilität mit wachsendem Cr-Gehalt monoton ansteigt.

Es ist außerdem bekannt, daß durch gleichzeitiges Zulegieren mehrerer Elemente zu (RE-TM)-Schichten deren Korrosionsstabilität weiter verbessert werden kann. EP-A 302 393 beschreibt einen magnetooptischen Aufzeichnungsträger mit einer (RE-TM)-Legierung, zu welcher gleichzeitig 1 bis 10 Atom-% mindestens eines Elementes aus der Gruppe Nb, Ti, Ta, Cr oder Al sowie 2 bis 10 Atom-% mindestens eines Elementes aus der Gruppe Pt, Au, Pd oder Rh zulegiert sind.

Ein wesentlicher Nachteil bei der Verwendung von Korrosionsinhibitoren besteht darin, daß die magnetischen und magnetooptischen Eigenschaften des Aufzeichnungsträgers durch das Zulegieren des Korrosionsinhibitors in der Regel negativ beeinflußt werden. In vielen Fällen wird der Kerr-Drehwinkel verringert und die Temperaturabhängigkeit der Magnetisierung sowie der Koerzitivfeldstärke ungünstig verändert, was negative Auswirkungen auf das Schreib- und Leseverhalten des Aufzeichnungsträgers hat.

Austauschgekoppelte Doppelschichtsysteme, welche eine erste magnetische Schicht mit niedriger Koerzitivfeldstärke und eine zweite magnetische Schicht mit hoher Koerzitivfeldstärke beinhalten, sind beispielsweise beschrieben in EP-A 51 296, US-A 4 628 485, US-A 4 753 853, EP-A 305 185, EP-A 330 394 und EP-A 333 467.

EP-A 51 296 beschreibt ein thermomagnetisches Aufzeichnungsmedium mit einer ersten und einer zweiten magnetisch anisotropen Schicht, wobei die zweite magnetische Schicht eine höhere Koerzitivkraft und eine niedrigere Curie-Temperatur als die erste magnetische Schicht aufweist. Die erste magnetische Schicht enthält im wesentlichen eine Gd-Legierung.

US-A 4 628 485 beschreibt einen magnetooptischen Aufzeichnungsträger mit einer ersten magnetischen dünnen Schicht niedriger Curie-Temperatur und hoher Koerzitivfeldstärke ("recording layer", Aufzeichnungsschicht), einer angrenzenden zweiten magnetischen Schicht ("reproducing layer", Leseschicht) mit einem hohen Kerr-Drehwinkel und weiteren dielektrischen und metallischen Schichten zur optischen Erhöhung des Kerr-Drehwinkels.

US-A 4 645 722 beschreibt ein magnetooptisches Aufzeichnungsmedium mit einer ersten hochkoerzitiven Magnetschicht und einem zweiten, mehrlagigen Magnetschichtsystem, welches einen höheren Kerr-Drehwinkel und/oder ein höheres Reflexionsvermögen besitzt als die erste Magnetschicht.

US-A 4 753 853 beschreibt ein austauschgekoppeltes magnetooptisches Doppelschichtsystem, wobei eine erste Schicht über einen niedrigen Curie-Punkt und eine hohe Koerzitivkraft verfügt und aus einer TM-reichen (Gd-Fe-Co)-Legierung besteht. Die zweite Schicht verfügt über einen hohen Curie-Punkt und eine niedrige Koerzitivkraft und besteht aus einer TM-reichen (Tb-Fe)-Legierung.

Aus der EP-A 330 394 geht ein magnetooptisches Aufzeichnungsmedium vom Doppelschicht-Typ hervor, dessen niederkoerzitive Magnetschicht hoher Curie-Temperatur Gd sowie mindestens eines der beiden Elemente Tb und Dy enthält. Die Koerzitivfeldstärken der beiden magnetischen Schichten sowie das Verhältnis aus der Domänenwandenergie zwischen diesen beiden Schichten und dem Produkt aus Sättigungsmagnetisierung und Dicke der niederkoerzitiven Schicht müssen speziellen Bedingungen genügen.

Die niederkoerzitive magnetische Schicht kann mit mindestens einem Element aus der Gruppe Ni, Cr, Ti, Al, Si, Pt, In und Cu dotiert sein. Es finden sich jedoch keinerlei Angaben zur Konzentration dieser Elemente. Außerdem geht aus EP-A 330 394 auch nicht hervor, zu welchem Zweck die niederkoerzitive Schicht mit diesen Elementen dotiert sein soll.

EP-A 364 212 beschreibt einen magnetooptischen Aufzeichnungsträger mit einer ersten magnetischen Schicht (Leseschicht) aus einer amorphen $R_1$-Fe-Co-Cr-Legierung, wobei $R_1$ mindestens eines der Elemente aus der Gruppe Tb und Dy bedeutet, und einer zweiten magnetischen Schicht (Aufzeichnungsschicht) aus einer amorphen $R_2$-Fe-Co-Cr-Legierung, wobei $R_2$ mindestens ein Element aus der Gruppe Tb, Dy und Gd bedeutet. Der Co-Anteil in der ersten magnetischen Schicht ist kleiner als der Co-Anteil in der zweiten magnetischen Schicht.

EP-A 364 196 beschreibt einen sehr ähnlichen magnetooptischen Aufzeichnungsträger wie EP-A 364 212, mit dem Unterschied, daß der Cr-Anteil in der ersten magnetischen Schicht größer ist als der Cr-Anteil in der zweiten magnetischen Schicht.

EP-A 333 467 beschreibt ein magnetooptisches Aufzeichnungsmedium mit einem austauschgekoppelten Doppelschichtsystem, bei welchem die niederkoerzitive magnetische Schicht mindestens ein leichtes RE-Element wie Nd, Pr, Ce, Sm etc. enthält. Es finden sich jedoch keine Angaben zur Korrosionsstabilität.

Aufgabe der vorliegenden Erfindung war es daher, eine magnetooptische Datenplatte mit hohem Lesesignal, insbesondere auch bei kurzen Wellenlängen, hoher Datenstabilität und hoher Korrosionsstabilität zu schaffen.

Diese Aufgabe wurde überraschend gelöst durch magnetooptische Datenplatten mit mindestens einem optisch transparenten dimensionsstabilen Substrat und mindestens einem Doppelschichtsystem aus zwei austauschgekoppelten magnetischen Schichten, die aus Legierungen von Seltenen Erden mit Übergangsmetallen bestehen und eine vertikale magnetische Anisotropie aufweisen, wobei die dem Lesekopf zugewandte erste magnetische Schicht eine Zusammensetzung entsprechend Formel I

$$RE_x TM_{100-x-a-b} A_a B_b \qquad I$$

hat und die zweite magnetische Schicht, die auf der dem Lesekopf abgewandten Seite der ersten magnetischen Schicht angeordnet ist, eine Zusammensetzung entsprechend Formel II hat

$$RE_u TM_{100-u-c} C_c \qquad II.$$

Hierbei bedeutet

RE     mindestens ein Element aus der Reihe Gd, Tb, Dy, Ho,

TM     mindestens ein Element aus der Reihe Fe, Co,

A     mindestens ein Element aus der Reihe La, Ce, Pr, Nd, Sm, Eu oder stabile Isotope von U,

B     und C unabhängig voneinander mindestens ein Element aus der Reihe Cr, Nb, Ta, Al, Si, Ni, Mo,

und es gilt

$5 \leq x \leq 30,$

$0,5 \leq a \leq 20,$

$0 \leq b \leq 25,$

$15 \leq u \leq 30,$

$0,5 \leq c \leq 25.$

Der erfindungsgemäß wesentliche Bestandteil der erfindungsgemäßen magnetooptischen Datenplatte ist das neue Doppelschichtsystem mit zwei magnetischen Schichten, von denen die erste Schicht (im folgenden auch "Leseschicht" genannt) mindestens ein Element aus der Reihe La, Ce, Pr, Nd, Sm, Eu oder stabile Isotope von U enthält und zumindest die zweite magnetische Schicht (im folgenden auch "Speicherschicht" genannt) mindestens ein Element aus der Reihe Cr, Nb, Ta, Al, Si, Ni und Mo enthält.

Die erfindungsgemäßen magnetooptischen Speichermedien enthalten in der Speicherschicht mindestens ein zusätzliches Element, welches bei der Wellenlänge des aufzeichnenden Lasers zu einer Erhöhung der effektiven Spinpolarisation und damit des magnetooptischen Auslesesignals führt. Eine Erhöhung der effektiven Spinpolarisation kann erreicht werden mit Elementen, welche eine nicht vollständig besetzte f-Elektronenschale besitzen. In besagten Elementen kann eine hohe Spinpolarisation, d.h. eine hohe Differenz zwischen Zuständen mit der einen und der entgegengesetzten Spinrichtung erreicht werden. Um die erhöhte Spinpolarisation für eine Erhöhung des Kerr-Effektes nutzen zu können, müssen die besagten zusätzlichen Elemente optische Übergänge im Bereich der Wellenlänge des aufzeichnenden Lasers besitzen. Magnetooptische Laufwerke nach dem Stand der Technik benutzen Laserwellenlägen von 780 - 830 nm. Für zukünftige Anwendungen sind Laserwellenlängen bis herab zu 400 nm denkbar. Zur Erhöhung des Kerr-Drehwinkels sind daher nur solche Elemente geeignet, bei denen der energetische Abstand zwischen dem f-Leitungsband und der Fermi-Kante unterhalb etwa 3 eV liegt. Nur mit solchen Elementen können beim Lesen der Speicherinformation magnetooptisch aktive Übergänge angeregt werden. Elemente mit nicht vollständig, aber mindestens halbbesetztem f-Leitungsband besitzen in der Regel einen Abstand zwischen Fermi-Niveau und f-Leitungsband, der größer ist als 3 eV. Sie sind somit als zusätzliches Element in der Leseschicht zur Erhöhung des Kerr-Drehwinkels nicht geeignet. Erfindungsgemäße Elemente A sind demnach Elemente aus der Reihe La, Ce, Pr, Nd, Sm, Eu oder stabile Isotope von U. Besagte Elemente sind dabei so zu wählen, daß die Spinpolarisation der Legierungsschicht und damit der Kerr-Drehwinkel bei der verwendeten Laserwellenlänge maximiert wird.

Im Gegensatz zu Elementen mit mehr als halb gefüllter f-Schale, welche in der Regel ferrimagnetisch zu TM-Atomen wie Fe oder Co koppeln, findet bei Elementen mit weniger als halb gefüllter f-Schale eine ferromagnetische Kopplung zu den genannten TM-Atomen aufgrund des geänderten Vorzeichens des Gesamtelektronenspins statt. Diese ferromagnetische Kopplung zu den TM-Atomen führt in (RE-TM)-Legierungen zu einer Erhöhung der Magnetisierung des TM-Untergitters und damit zu einer Erhöhung der Gesamtmagnetisierung der (RE-TM)-Legierung. Aufgrund der erhöhten Entmagetisierungskräfte wird die Koerzitivfeldstärke senkrecht zur Oberfläche dadurch stark herabgesetzt.

In magnetooptischen Einzelschichten nach dem Stand der Technik muß die Konzentration der Elemente A gering gehalten werden, weshalb keine entscheidende Erhöhung des Kerr-Drehwinkels und des magnetooptischen Auslesesignals erzielt wird.

Die erfindungsgemäßen magnetooptischen Datenplatten zeichnen sich dadurch aus, daß die durch Zugabe der Elemente A in der Leseschicht bedingte Abnahme der Koerzitivfeldstärke durch die Verwendung einer austauschgekoppelten hochkoerzitiven Speicherschicht mit vertikaler magnetischer Anisotropie kompensiert wird.

Da hierdurch wesentlich höhere Konzentrationen der Elemente A in der Leseschicht eingestellt werden können, lassen sich im Gegensatz zu bekannten magnetooptischen Datenplatten wesentlich verbesserte magnetooptische Auslesesignale und eine deutlich verbesserte Datenstabilität erzielen. Dies gilt in besonderem Maße beim Übergang zu Wellenlängen des Laserlichts kleiner 800 nm.

Die Konzentration der Elemente A sowie die Dicke der Leseschicht wird durch folgende Überlegungen bestimmt. Mit zunehmender Konzentration der Elemente A wird die Vertikalanisotropie der Leseschicht reduziert und damit die Austauschwechselwirkung der beiden Schichten reduziert. Die Dicke der Leseschicht sollte die Eindringtiefe des verwendeten Laserlichts übersteigen, um eine möglichst optimale Erhöhung des Kerr-Drehwinkels zu gewährleisten. Bei reduzierter Austauschwechselwirkung kann es bereits bei Schichtdicken der Leseschicht, die unterhalb der Eindringtiefe des Laserlichts liegen, zu einer Unterbrechung der Austauschkopplung, d.h. zu einem getrennten Schalten von Speicher- und Leseschicht, kommen. Aufgrund des komplizierten Hystereseverhaltens ist dieser Fall für die Anwendung zu vermeiden.

Die in der Leseschicht einzustellende Konzentration der Elemente A hängt darüber hinaus von der Art und Konzentration der in den Formeln I und II angegebenen RE- und TM-Komponenten sowie des mindestens einen Elementes aus der Gruppe Cr, Nb, Ta, Al, Si, Ni und Mo ab.

Bei einer bevorzugten Ausführungsform der erfindungsgemäßen magnetooptischen Datenplatten ist von besonderem Vorteil, daß sich die Eigenschaften von Elementen A und von Elementen aus der Gruppe Cr, Nb, Ta, Al, Si, Ni und Mo in geeigneter Weise kombinieren lassen. Dies ist insbesondere bei unerwünschten Nebeneffekten der einzelnen Elementzugaben sinnvoll.

Besonders bevorzugte erfindungsgemäße Aufzeichnungsträger enthalten in der Leseschicht mindestens ein Element A und Chrom und in der Speicherschicht Chrom.

Es ist beispielsweise bekannt, daß in magnetooptischen Aufzeichnungsschichten aus (RE/TM)-Legierungen der Kerr-Drehwinkel durch Zugabe der Elemente A erhöht und durch Zugabe von Cr erniedrigt werden kann. Bei gleichzeitiger Anwesenheit von Cr und Elementen A in der (RE/TM)-Legierung der Leseschicht der erfindungsgemäßen magnetooptischen Datenplatten kann daher durch die Element A-Zugabe die Erniedrigung des Kerr-Drehwinkels infolge des Cr-Gehaltes kompensiert werden und somit bei hoher Korrosionsstabilität ein hohes Auslesesignal erhalten werden.

Das erfindungsgemäße Doppelschichtsystem zeichnet sich dadurch aus, daß die Leseschicht mindestens ein Element A und zumindest die Speicherschicht mindestens ein zusätzliches Element aus der Reihe Cr, Nb, Ta, Al, Si, Ni oder Mo enthält.

Die korrosionsinhibierenden Elemente aus der Gruppe Cr, Nb, Ta, Al, Si, Ni, Mo verhindern insbesondere eine großflächige Oxidation der (RE-TM)-Schicht. In einer besonders bevorzugten Ausführungsform der Erfindung enthalten sowohl die Leseschicht als auch die Speicherschicht mindestens ein Element aus der Gruppe Cr, Nb, Ta, Al, Si, Ni, Mo. Durch die Zugabe mindestens eines dieser Elemente wird eine intrinsische Korrosionsinhibierung der Leseschicht erreicht und damit die Bildung nichtmagnetischer Zwischenschichten deutlich eingeschränkt. Das Doppelschichtsystem zeichnet sich daher durch eine ausgezeichnet hohe Lebensdauer aus. Als Folge der Korrosionsinhibierung wird eine höhere Austauschkopplung zwischen Speicher- und Leseschicht, insbesondere auch bei geringer Vertikalausrichtung der Leseschicht erreicht. Die Konzentration der Elemente A kann dadurch wesentlich gesteigert werden, ohne daß negative Einflüsse auf das Hystereverhalten des Doppelschichtsystems auftreten. Bei gleichzeitiger Verwendung eines den Kerr-Drehwinkel erhöhenden Elements und eines korrosionsinhibierenden Elements in der Leseschicht tritt somit ein synergistischer Effekt im Hinblick sowohl auf den Kerr-Drehwinkel als auch auf die Korrosionsstabilität auf.

Besonders bevorzugte erfindungsgemäße Aufzeichnungsträger enthalten in der Leseschicht Niob und Chrom und in der Speicherschicht Chrom.

Das mindestens ein Element A in der Leseschicht und das mindestens ein Element aus der Gruppe Cr, Nb, Ta, Al, Si, Ni, Mo in der Speicherschicht und eventuell in der Leseschicht ist in vertikaler Richtung, d.h. über die Schichtdicke hinweg und in horizontaler Richtung, d.h. in der Schichtebene gleichmäßig oder ungleichmäßig verteilt.

Hierbei ist es von Vorteil, wenn die Verteilung von mindestens einem Element aus der Gruppe Cr, Nb, Ta, Al, Si, Ni, Mo in horizontaler Richtung variiert, d.h. wenn die Konzentration dieser Elemente sich in der Schichtebene kontinuierlich oder diskontinuierlich verändert. In einer besonders bevorzugten Ausführungsform nimmt die Cr-Konzentration in der chromhaltigen Schicht oder den chromhaltigen Schichten vom inneren Rand bis zu deren äußeren Rand hin kontinuierlich oder diskontinuierlich zu.

Die amorphen (RE-TM)-Legierungen der Leseund der Speicherschicht können in bekannter Weise als RE-Element mindestens ein Element aus der Reihe Gd, Tb, Dy oder Ho und als TM-Element mindestens ein Element aus der Reihe Fe und Co enthalten. Die ferrimagnetische Kopplung zwischen diesen genannten RE- und TM-Atomen führt zu einer hohen Koerzitivfeldstärke in einer Richtung senkrecht zur Schichtebene. Hierdurch wird ein maximaler Kerr-Drehwinkel bei Bestrahlung des Mediums senkrecht zur Oberfläche sowie eine hohe Datensicherheit gewährleistet. Die Größe der Vertikalanisotropie und damit der maximale Wert der Koerzitivfeldstärke in einer Richtung senkrecht zur Schichtebene ist jedoch in beiden Schichten unterschiedlich. Bekannte Verbindungen mit hoher Koerzitivfeldstärke sind Tb- und/oder Dyhaltige Legierungen wie zum Beispiel Tb-Fe, Tb-Fe-Co, Dy-Fe oder Dy-Fe-Co, wobei letztgenannte Legierungen jedoch nur einen relativ kleinen Kerr-Drehwinkel besitzen. Weiterhin sind Legierungen wie Gd-Co, Gd-Fe oder Gd-Fe-Co bekannt, welche zwar einen erhöhten Kerr-Drehwinkel, jedoch eine reduzierte Koerzitivfeldstärke senkrecht zur Schichtebene besitzen.

Bekannte austauschgekoppelte Schichtsysteme benutzen daher als Leseschicht eine Legierung auf Basis von Gd-Co, Gd-Fe oder Gd-Fe-Co und als Speicherschicht eine Legierung auf Basis Tb-Fe, Tb-Fe-Co, Dy-Fe oder Dy-Fe-Co, wobei der größere Kerr-Drehwinkel der Leseschicht zu einem erhöhten magnetooptischen Auslesesignal und die höhere Koerzitivfeldstärke der Speicherschicht zu einer verbesserten Stabilität der ummagnetisierten Bereiche und damit der Speicherinformation führt.

Schließlich kann die Curie-Temperatur der Leseschicht in bekannter Weise durch Erhöhen des Co-Anteils über die Curie-Temperatur der Speicherschicht hinaus erhöht werden, was eine weitere Erhöhung des magnetooptischen Auslesesignals zur Folge hat. Während bei einem einschichtigen Speichermedium mit der Erhöhung der Curie-Temperatur eine Reduktion der Empfindlichkeit einhergeht, ist die Erhöhung der Curie-Temperatur der Leseschicht bei einem austauschgekoppelten Doppelschichtmedium nicht mit einem Empfindlichkeitsverlust verbunden, sofern die Austauschkopplung der beiden Schichten bei Zimmertemperatur hoch, im Bereich der Curie-Temperatur der Speicherschicht jedoch klein ist. Ist letztgenannte Bedingung nicht erfüllt, so ist bei zu hohen Curie-Temperaturen der Leseschicht eine Änderung der Magnetisierungsrichtung der Speicherschicht mit unverändert niedrigen Schreibleistungen nicht möglich und somit das magnetooptische Speichermedium bei kleinen Laserschreibleistungen nicht beschreibbar.

Um eine verbesserte Temperaturabhängigkeit der Austauschkopplung zu erreichen, können die erfindungsgemäßen Doppelschichtsysteme zwischen den beiden magnetischen Schichten mindestens eine weitere magnetische Zwischenschicht enthalten, welche eine Curie-Temperatur besitzt, die kleiner ist als die Curie-Temperatur der Speicherschicht, jedoch größer ist als Raumtemperatur. Beispiele für diese weiteren magnetischen Schichten sind in EP-A 258 978 angegeben.

Die genannte Zwischenschicht vermittelt bei Raumtemperatur eine hohe Austauschkopplung zwischen Lese- und Speicherschicht. Im Bereich der Schreibtemperatur, d.h. der Curie-Temperatur der Speicherschicht, wird jedoch aufgrund der fehlenden langreichweitigen magnetischen Ordnung in der Zwischenschicht die Austauschkopplung zwischen Speicher- und Leseschicht stark reduziert. Hierdurch wird ein Ummagnetisieren der Speicherschicht trotz der bestehenden Ausrichtung der Leseschicht ermöglicht. Beim Abkühlen nimmt die Untergittermagnetisierung der Speicherschicht schneller zu als die Austauschkopplung zwischen Speicher-und Leseschicht. Bei einer kritischen Temperatur erfolgt daher eine Ausrichtung der Leseschicht entsprechend der Ausrichtung der Speicherschicht, während der unerwünschte umgekehrte Prozeß, d.h. eine Ausrichtung der Speicherschicht entsprechend der Ausrichtung der Leseschicht unterbunden wird.

Die Lese- und Speicherschicht der erfindungsgemäßen Datenplatten weisen eine Dicke im üblichen und bekannten Bereich auf. Im allgemeinen liegt dieser Dickenbereich bei 10 bis 500 nm. Bevorzugt beträgt die Dicke der Leseschicht 20 bis 40 mm, die der Speicherschicht 40 bis 60 mm.

Die Herstellung der neuen magnetooptischen Doppelschicht erfolgt im Rahmen der Herstellung

der erfindungsgemäßen magnetooptischen Daten-platte.

Die erfindungsgemäße magnetooptische Daten-platte enthält neben der neuen magnetooptischen Doppelschicht das optisch transparente dimensionsstabile Substrat als weiteren wesentlichen Be-standteil.

Beispiele vorteilhafter dimensionsstabiler Sub-strate sind die üblichen und bekannten, scheiben-förmigen, optisch klaren, dimensionsstabilen Sub-strate. Im allgemeinen bestehen diese aus optisch transparenten keramischen Materialien oder aus Kunststoffen. Üblicherweise haben sie einen Durchmesser, welcher im Bereich von 50 bis 200 mm, vorteilhafterweise 80 bis 150 mm und insbesondere 90 oder 130 mm liegt. Im allgemeinen sind sie 0,5 bis 1,5 mm, vorzugsweise 0,8 bis 1,3 mm dick.

Ein Beispiel eines geeigneten optisch transparenten dimensionsstabilen keramischen Materials ist Glas. Beispiele geeigneter optisch klarer dimen-sionsstabiler Kunststoffe sind Polycarbonat, Poly-methylmethacrylat, Polymethylpenten, Cellulosea-cetobutyrat, Gemische aus Polyvinylidenchlorid und Polymethylmethacrylat und Gemische aus Polystyrol und Poly(2,6-dimethyl-phen-1,4-ylen-ether). Hiervon sind die dimensionsstabilen Substrate aus Kunststoffen besonders vorteilhaft.

Diejenige Oberfläche des dimensionsstabilen Substrats, welche der neuen magnetooptischen Doppelschicht zugewandt ist, kann Strukturen aufweisen.

Die Strukturen in der Oberfläche des dimensionsstabilen Substrats liegen im Mikrometer- und/oder Submikrometer-Bereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten sein, wie dies beispielsweise bei den bekannten Audio- oder Video-Compact-Disks der Fall ist, oder sie können der Codierung der eingeschriebenen Daten dienen. Die Strukturen bestehen aus erhabenen Teilen und/oder aus Vertiefungen. Diese liegen in der Form von durchge-henden konzentrischen oder spiralförmigen Spurril-len oder als isolierte Hügel und/oder Löcher vor. Außerdem kann die Struktur eine mehr oder weniger glatte Wellenform haben. Den Spurrillen wird hierbei der Vorzug gegeben. Diese weisen in ihrer Querrichtung eine rechteckige, sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 1,0 μm breiten "grooves", zwischen denen jeweils ein 1

bis 3 μm breites "land" liegt.

Die Herstellung des besonders bevorzugt verwendeten dimensionsstabilen Substrats erfolgt in an sich bekannter Weise durch die formgebende Bearbeitung des das Substrat aufbauenden Kunststoffs oder Kunststoffgemischs mit Hilfe der Spritz-gußtechnik gegebenenfalls unter Reinraumbedin-gungen, so wie dies beispielsweise in der DE-A-37 27 093 beschrieben wird.

Die erfindungsgemäße magnetooptische Datenplatte kann neben dem dimensionsstabilen Substrat und der neuen magnetooptischen Doppelschicht zumindest noch eine weitere Schicht enthalten.

Die Anordnung der verschiedenen Schichten hängt davon ab, ob die magnetooptische Speicherschicht beim Beschreiben oder Lesen von der Substrat- -oder Luftseite her mit Laserlicht bestrahlt wird. Die Bestrahlung von der Substratseite ist bevorzugt.

Im letzten Fall kann sich beispielsweise zwischen dem dimensionsstabilen Substrat und dem neuen magnetooptischen Doppelschichtsystem eine übliche und bekannte Antireflexionsschicht aus einem optisch transparenten dielektrischen Material mit hohem Brechungsindex befinden. Der Brechungsindex ist größer als der des Substrats, aber kleiner als der der Leseschicht. Dieses Material enthält üblicherweise Oxide und/oder Nitride oder es besteht aus diesen Verbindungen.

Außerdem kann auf der dem Substrat abgewandten Seite des neuen magnetooptischen Doppelschichtsystems eine weitere, Oxide, Carbide und/oder Nitride enthaltende oder aus Oxiden, Carbiden und/oder Nitriden bestehende optisch transparente dielektrische Schicht vorhanden sein.

Des weiteren kann sich auf der dem dimensionsstabilen Substrat abgewandten Seite der neuen magnetooptischen Aufzeichnungsschicht, direkt oder auf einer hierauf angeordneten transparenten Schicht aus Oxiden, Carbiden und/oder Nitriden, eine übliche und bekannte Reflexionsschicht befinden, welche üblicherweise aus Metallen besteht.

Überdies kann die erfindungsgemäße magnetooptische Datenplatte auf der Seite der Reflexionsschicht, welche der neuen magnetooptischen Aufzeichnungsschicht abgewandt ist, und/oder auf mindestens einer Seite des neuen magnetooptischen Doppelschichtsystems eine übliche und be-kannte dielektrische Schutz- oder Antikorrosions-schicht aufweisen, die ebenfalls Carbide, Oxide und/oder Nitride enthält oder aus Carbiden, Oxiden und/oder Nitriden besteht.

Hierbei können die zusätzlichen Schichten (Reflexionsschicht bzw. Schutz/Antikorrosionsschicht) auch aus mehreren separaten Lagen aufgebaut sein. Diese Schichten können röntgenamorph oder polykristallin sein.

Die Dicke dieser zusätzlichen Schichten ist allgemein bekannt und kann beispielsweise dem eingangs zitierten Stand der Technik entnommen werden.

Es ist allerdings auch möglich, daß die Bestrahlung der magnetooptischen Doppelschicht von der Luftseite her, direkt oder durch eventuell vorhandene transparente Antireflexions- und/oder Schutzschichten, erfolgt. In diesem Fall ist die Antireflexionsschicht auf der dem Substrat abgewandten Seite des magnetooptischen Doppelschichtsystems angeordnet. Die Speicherschicht des erfindungsgemäßen Doppelschichtsystems ist in diesem Fall dem Substrat zugewandt, während sich die Leseschicht auf der dem Substrat abgewandten Seite befindet. Entsprechend befindet sich die Reflexionsschicht zwischen dem Substrat und dem magnetooptischen Doppelschicht-System.

Weitere Beispiele geeigneter Möglichkeiten zur Anordnung der verschiedenen Schichten in der erfindungsgemäßen magnetooptischen Datenplatte gehen aus der US-A-4 710 418 hervor.

Die Anordnung der beiden magnetischen Schichten des erfindungsgemäßen Doppelschichtsystems ist jeweils so gewählt, daß die Leseschicht zwischen der Laserlichtquelle und der Speicherschicht angeordnet ist.

Die Herstellung der Reflexionsschicht, der Antikorrosionsschicht und die der weiteren Schichten erfolgt im Rahmen der Herstellung der erfindungsgemäßen magnetooptischen Datenplatte, wobei sich die Reihenfolge der einzelnen Herstellungs- oder Verfahrensschritte aus dem jeweiligen Aufbau der erfindungsgemäßen magnetooptischen Datenplatte ergibt.

Zwei der vorstehend beschriebenen erfindungsgemäßen magnetooptischen Datenplatten können des weiteren "sandwich"-artig so miteinander verbunden werden, daß ihre Aufzeichnungsschichten einander zugekehrt sind und ein gewisser Abstand zwischen ihnen herrscht. Hierfür werden die üblichen und bekannten Techniken zum Verbinden zweier magnetooptischer Datenplatten angewandt, wie sie beispielsweise aus der US-A-4 751 124 oder der DE-A-37 18 302 bekannt sind.

Die Herstellung der erfindungsgemäßen magnetooptischen Datenplatte geht aus von dem vorstehend beschriebenen dimensionsstabilen Substrat, auf dessen eine Oberfläche die neue magnetooptische Doppelschicht in der gewünschten Dikke und mit der jeweils erfindungsgemäß erforderlichen Zusammensetzung sowie gegebenenfalls die weiteren dielektrischen und/oder Metallschichten in der gewünschten Reihenfolge, Anzahl und Dicke mit dem jeweils gewünschten Aufbau aufgebracht werden, wonach man in der neuen magnetooptischen Doppelschicht eine definierte, senkrecht zu ihrer Oberfläche orientierte Magnetisierung in üblicher und bekannter Weise induziert.

Hierbei erfolgt das Aufbringen der beiden magnetischen Schichten der neuen magnetooptischen Doppelschicht und das der gebenenfalls vorhandenen weiteren Schichten mit Hilfe der üblichen und bekannten Techniken der Herstellung dünner Schichten durch Aufdampfen, reaktives Aufdampfen, Ionenplattieren ("ion-plating"), "ion cluster beam deposition" (ICB), Kathodenzerstäubung, reaktive Kathodenzerstäubung, Magnetronkathodenzerstäubung oder reaktive Magnetronkathodenzerstäubung, wobei man die Kathodenzerstäubungsmethoden, welche allgemein auch als "sputtering" bezeichnet werden, bevorzugt anwendet.

Bei der Kathodenzerstäubung ("sputtering") werden die entsprechenden Metalle, Carbide, Oxide, Nitride und/oder die gegebenenfalls verwendeten sonstigen Verbindungen in der gewünschten Reihenfolge und Menge von einer auf die Kathode aufgelegten Materialquelle ("sputtering target") aus im Vakuum in einer Prozeßgasatmosphäre zerstäubt und auf dem dimensionsstabilen Träger oder auf einer bereits hierauf vorhandenen Schicht abgeschieden. Üblicherweise enthält hierbei das Prozeßgas ein Edelgas wie Argon.

Bei der reaktiven Kathodenzerstäubung ("reactive sputtering") werden dem Prozeßgas weitere reaktive Gase wie Wasserstoff, Kohlenwasserstoffe, Sauerstoff, Stickstoff u.a. in der gewünschten Menge zu einem geeigneten Zeitpunkt zugemischt. Hierdurch kann man durch Zerstäubung eines Metalls beispielsweise in der Gegenwart von Kohlenwasserstoffen, Sauerstoff und/oder Stickstoff im Prozeßgas direkt die betreffenden Metalloxid-, -nitrid-, -carbid-, -carbidoxid-, -carbidnitrid-, -oxidnitrid- oder -carbidoxidnitrid-Schichten abscheiden. Dabei können die Dicke, die Struktur und die Zusammensetzung der betreffenden Schichten über die Zerstäubungsrate, die Abscheiderate, den Prozeßgasdruck und die Prozeßgaszusammensetzung auf an sich bekannte Weise eingestellt werden.

Bei der (reaktiven) Magnetronkathodenzerstäubung ["(reactive) magnetron sputtering"] befindet sich das "target" bekanntermaßen in einem Magnetfeld.

Beispiele geeigneter "sputtering"-Verfahren gehen aus der US-A-4 670 353, der US-A-4 670 316 oder der DE-A-37 35 385 hervor.

Die beiden magnetischen Schichten der neuen magnetooptischen Doppelschicht der erfindungsgemäßen Datenplatte können beispielsweise mittels der zeitlich getrennten Kathoden- oder Magnetronkathodenzerstäubung zweier (RE-TM)-Legierungen geeigneter äußerer Form als Materialquelle ("sputtering target") im Vakuum in einer Prozeßgasatmosphäre und durch Abscheiden der Lanthanid-Übergangsmetall-Legierungen aus der Gasphase auf der Oberfläche des dimensionsstabilen Substrats oder einer hierauf bereits befindlichen Schicht erzeugt werden, wobei man erfindungsgemäß zur Abscheidung der ersten magnetischen Schicht eine (RE-TM)-Legierung verwendet, die mindestens ein Element aus der Reihe La, Ce, Pr, Nd, Sm, Eu oder stabile Isotope von U enthält. Darüber hinaus enthält mindestens eine der beiden (RE-TM)-Legierungen mindestens ein Element aus der Reihe Cr, Nb, Ta, Al, Si, Ni und Mo.

Hierbei kann in den Materialquellen die Konzentration der Elemente aus der Reihe La, Ce, Pr, Nd, Sm, Eu oder stabile Isotope U und gegebenenfalls von Cr, Nb, Ta, Al, Si, Ni und Mo räumlich konstant sein oder sich in Abhängigkeit vom Radius oder in horizontaler Richtung ändern. Diese Änderung der Konzentrationen kann kontinuierlich oder diskontinuierlich erfolgen.

Die erfindungsgemäßen magnetooptischen Datenplatten können in der üblichen Weise von der Seite des optisch transparenten dimensionsstabilen Substrats her mit Hilfe eines impulsmodulierten, auf die neuen magnetooptischen Doppelschichten fokussierten und senkrecht auf diese auftreffenden Schreiblaserstrahls einer Wellenlänge λ von kleiner als 1000 nm mit Daten in Form ummagnetisierter "spots" beschrieben werden. Hiernach können die Daten mit Hilfe eines auf die beschriebenen neuen magnetooptischen Doppelschichten fokussierten und senkrecht auf sie auftreffenden Dauerstrichlaserstrahls gelesen werden, wobei man das von den Leseschichten selbst oder das von Reflexionsschichten reflektierte Licht erfaßt, analysiert und in Signale umwandelt. Im Falle der erfindungsgemäßen magnetooptischen Datenplatten können hierfür die üblichen und bekannten laseroptischen Plattenlaufwerke mit laseroptischen Köpfen, welche Halbleiterlaser enthalten, verwendet werden.

Die erfindungsgemäßen magnetooptischen Datenplatten haben besondere Vorteile.

Die erfindungsgemäßen Datenplatten weisen wesentlich verbesserte magnetooptische Auslesesignale und eine deutlich verbesserte Datenstabilität auf.

Hinzu kommt noch, daß die neuen magnetooptischen Doppelschichten in hervorragender und dennoch einfacher Weise dem Eigenschaftsprofil der übrigen in den erfindungsgemäßen magnetooptischen Datenplatten gegebenenfalls vorhandenen Schichten angepaßt werden können, wodurch sich bislang unbekannte und/oder bislang als nicht realisierbar erachtete Möglichkeiten der Optimierung magnetooptischer Datenplatten ergeben.

Die erfindungsgemäßen magnetooptischen Datenplatten weisen eine hohe Korrosionsstabilität auf. Gegenüber den bekannten magnetooptischen Datenplatten ist ein hoher Korrosionsschutz auch an den besonders gefährdeten Stellen gegeben.

Beispiele 1 bis 3

Die Zusammensetzung der magnetischen Schichten wurde jeweils mittels ICP-Spektroskopie (ICP: induced coupled plasma) chemisch analysiert. Der Kerr-Drehwinkel wurde mit einem He-Ne-Laser der Wellenlänge 633 nm von der Luftseite her senkrecht zur Schichtebene in Abhängigkeit von einem durchstimmbaren äußeren Magnetfeld gemessen. Die abgeschiedenen magnetischen Schichten besitzen eine Achse der leichten Magnetisierung in einer zur Dünnschichtoberfläche senkrechten Richtung.

Zur Untersuchung der Korrosionsstabilität wurden die Schichten in einem Klimaschrank bei konstanter Temperatur und Feuchtigkeit (80°C, 80 % relative Feuchtigkeit) gelagert. Die Messung des Kerr-Drehwinkels wurde in bestimmten Zeitabständen wiederholt. Es zeigte sich, daß der remanente Kerr-Drehwinkel mit zunehmender Auslagerzeit abfällt. Die Abnahme hängt von der chemischen Zusammensetzung der magnetischen Schicht ab und läßt sich durch die Größe $t_{0,5}$ charakterisieren. $t_{0,5}$ kennzeichnet die Zeit, nach welcher der remanente Kerr-Drehwinkel auf 50 % seines Anfangswertes abgefallen ist.

Beispiel 1

In einer Gleichspannungs-Kathodenzerstäubungsanlage wurde ein Target, bestehend aus Tb, Fe, Co und Nd eingesetzt. Eine Glasplatte (Durchmesser 130 mm) wurde parallel zum Target in einem Abstand von 65 mm angeordnet. Die Vakuumkammer der Kathodenzerstäubungsanlage wurde auf ein Vakuum von $1 \times 10^{-7}$ mbar evakuiert. Danach wurde Ar-Gas bis zu einem Druck von $6 \times 10^{-3}$ mbar eingelassen. Durch Anlegen einer Gleichspannung bei einer Zerstäubungsleistung von 500 W wurde eine 80 nm dünne Schicht mit der Zusammensetzung $(Tb_{21}Fe_{58}Co_{21})_{92}Nd_8$ abgeschieden.

Experimentell wurde gefunden, daß der remanente Kerr-Drehwinkel der $(Tb_{21}Fe_{58}Co_{21})_{92}Nd_8$-Schicht 15 % größer ist als der remanente Kerr-Drehwinkel einer Vergleichsschicht ohne Nd. Es ergab sich weiterhin, daß die Koerzitivfeldstärke der Schicht kleiner ist als 140 kA/m und damit die Schicht für die magnetooptische Datenspeicherung nicht geeignet ist. Der $t_{0,5}$-Wert der Schicht wurde zu 6 h bestimmt.

Beispiel 2

In einer Gleichspannungs-Kathodenzerstäubungsanlage wurde ein Target, bestehend aus Tb, Fe, Co, Cr und Nd eingesetzt. Eine Glasplatte (Durchmesser 130 mm) wurde parallel zum Target in einem Abstand von 65 mm angeordnet. Die Vakuumkammer der Kathodenzerstäubungsanlage wurde auf ein Vakuum von $1 \times 10^{-7}$ mbar evakuiert. Danach wurde Ar-Gas bis zu einem Druck von $6 \times 10^{-3}$ mbar eingelassen. Durch Anlegen einer Gleichspannung bei einer Zerstäubungsleistung von 500 W wurde eine 80 nm dünne Schicht mit der Zusammensetzung $(Tb_{21}Fe_{58}Co_{21})_{88}Nd_8Cr_4$ abgeschieden.

Es wurde gefunden, daß der remanente Kerr-Drehwinkel der Schicht 15 % größer ist als der remanente Kerr-Drehwinkel einer Vergleichsschicht ohne Nd. Es ergab sich weiterhin, daß die Koerzitivfeldstärke der Schicht kleiner ist als 140 kA/m und damit die Schicht für die magnetooptische Datenspeicherung nicht geeignet ist. Der $t_{0,5}$-Wert der Schicht wurde zu 55 h bestimmt. Die Korrosionsstabilität der abgeschiedenen Schicht ist somit gegenüber der Schicht aus Beispiel 1 deutlich gesteigert.

Beispiel 3

In einer Gleichspannungs-Kathodenzerstäubungsanlage wurde ein erstes Target, bestehend aus Tb, Fe, Co, Cr und Nd sowie ein zweites Target, bestehend aus Tb, Fe, Co und Cr, eingesetzt. Eine Glasplatte (Durchmesser 130 mm) wurde parallel zu den Targets in einem Abstand von 65 mm angeordnet. Die Vakuumkammer der Kathodenzerstäubungsanlage wurde auf ein Vakuum von $1 \times 10^{-7}$ mbar evakuiert. Danach wurde Ar-Gas bis zu einem Druck von $6 \times 10^{-3}$ mbar eingelassen. Durch Anlegen einer Gleichspannung bei einer Zerstäubungsleistung von 500 W an das erste Target wurde zunächst eine 30 nm dünne Schicht mit der Zusammensetzung $(Tb_{21}Fe_{58}Co_{21})_{88}Nd_8Cr_4$ abgeschieden. Danach wurde durch Anlegen einer Gleichspannung bei einer Zerstäubungsleistung von 500 W an das zweite Target eine 50 nm dünne Schicht mit der Zusammensetzung $Tb_{20}Fe_{48}Co_{22}Cr_{10}$ abgeschieden.

Der Kerr-Drehwinkel der Doppelschicht wurde von der Substratseite her in Abhängigkeit von einem durchstimmbaren äußeren Magnetfeld senkrecht zur Schichtebene gemessen. Es wurde ein remanenter Kerr-Drehwinkel gemessen, der um 15 % größer ist als der Kerr-Drehwinkel einer Vergleichsschicht ohne Nd. Es wurde weiterhin gefunden, daß die Koerzitivfeldstärke des Schichtsystems 360 kA/m beträgt. Das Schichtsystem ist somit für die magnetooptische Datenspeicherung geeignet.

Bei der Untersuchung der Korrosionsstabilität wurde die Messung des Kerr-Drehwinkels von der Luft- und Substratseite her in bestimmten Zeitabständen wiederholt. Es zeigte sich, daß der $t_{0,5}$-Wert der angegebenen Schicht 55 h übersteigt.

Das erfindungsgemäße Schichtsystem besitzt somit eine gegenüber der Schicht aus Beispiel 2 verbesserte Korrosionsstabilität.

**Patentansprüche**

1. Magnetooptische Datenplatte mit mindestens einem optisch transparenten dimensionsstabilen Substrat und mindestens einem Doppelschichtsystem aus zwei austauschgekoppelten magnetischen Schichten, die aus Legierungen von Seltenen Erden mit Übergangsmetallen bestehen und eine vertikale magnetische Anisotropie aufweisen, dadurch gekennzeichnet, daß die dem Lesekopf zugewandte erste magnetische Schicht eine Zusammensetzung entsprechend Formel I

$$RE_xTM_{100-x-a-b}A_aB_b \qquad I,$$

hat und die zweite magnetische Schicht, die auf der dem Lesekopf abgewandten Seite der ersten magnetischen Schicht angeordnet ist, eine Zusammensetzung entsprechend Formel II hat

$$RE_uTM_{100-u-c}C_c \qquad II,$$

wobei
    RE     mindestens ein Element aus der Reihe Gd, Tb, Dy, Ho,
    TM     mindestens ein Element aus der Reihe Fe, Co,
    A     mindestens ein Element aus der Reihe La, Ce, Pr, Nd, Sm, Eu oder stabile Isotope von U,
    B     und C unabhängig voneinander mindestens ein Element aus der Reihe Cr, Nb, Ta, Al, Si, Ni, Mo,
bedeutet und
$5 \leq x \leq 30$,
$0,5 \leq a \leq 20$,
$0 \leq b \leq 25$,
$15 \leq u \leq 30$,
$0,5 \leq c \leq 25$
gilt.

2. Magnetooptische Datenplatte nach Anspruch 1, dadurch gekennzeichnet, daß die dem Lesekopf zugewandte erste magnetische Schicht eine Zusammensetzung entsprechend Formel I hat und $0,5 \leq b \leq 25$ gilt.

3. Magnetooptische Datenplatte nach Anspruch 1 oder 2, dadurch gekennzeichnet, daß die Elemente B und C jeweils Chrom sind.

4. Magnetooptische Datenplatte nach Anspruch 3, dadurch gekennzeichnet, daß Element A Niob ist.

5. Magnetooptische Datenplatte nach einem der Ansprüche 1 bis 4, dadurch gekennzeichnet, daß die Curie-Temperatur der ersten magnetischen Schicht größer ist als die Curie-Temperatur der zweiten magnetischen Schicht.

6. Magnetooptische Datenplatte nach Anspruch 5, dadurch gekennzeichnet, daß zwischen der ersten und der zweiten magnetischen Schicht mindestens eine weitere magnetische Zwischenschicht mit einer Curie-Temperatur oberhalb Raumtemperatur, die kleiner ist als die Curie-Temperatur der zweiten Magnetschicht, angeordnet ist.

7. Magnetooptische Datenplatte nach einem der Ansprüche 1 bis 6, dadurch gekennzeichnet, daß auf mindestens einer Seite des Doppelschicht-Systems eine dielektrische Schicht aus einem Metallnitrid-, -oxid, -carbid oder deren Mischungen angeordnet ist.

8. Magnetooptische Datenplatte nach einem der Ansprüche 1 bis 7, dadurch gekennzeichnet, daß auf der dem Lesekopf abgewandten Seite des Doppel-Schichtsystems oder auf einer hierauf angeordneten dielektrischen Schicht eine Reflexionsschicht angeordnet ist.

9. Magnetooptische Datenplatte nach einem der Ansprüche 1 bis 8, dadurch gekennzeichnet, daß die Dicke der ersten Schicht 20 bis 40 nm und die der zweiten Schicht 40 bis 60 nm beträgt.